# EUROPEAN PATENT SPECIFICATION

(11) **EP 0 753 245 B1**
(45) Date of publication and mention of the grant of the patent: **21.11.2001**
(21) Application number: 96110884.2
(22) Date of filing: 05.07.1996
(51) Int. Cl.: A01D 34/00, A01G 3/06

(54) **Portable gardening implement with adjustable safety handgrip**
Tragbares Gartengerät mit einstellbarem Sicherheitsführungsgriff
Appareil de jardinage portatif à poignée de guidage de sécurité réglable

(30) Priority: 13.07.1995 IT VI950061 U
(43) Date of publication of application: 15.01.1997
(73) Proprietor: VALEX S.P.A., 36015 Schio (Vicenza) (IT)
(72) Inventor: Spillere, Antonio, 36030 Villaverla (Vicenza) (IT)
(74) Representative: Forattini, Amelia

(56) References cited:
- EP-A- 0 284 659
- EP-A- 0 515 909
- DE-A- 4 100 452
- US-A- 2 263 431
- US-A- 3 597 842
- US-A- 4 047 299
- US-A- 4 798 185
- US-A- 5 048 187
- US-A- 5 265 341

## Description

The present invention relates to a portable implement for gardening and similar activities, such as for example motorized nylon-whip edge trimmers, with an adjustable safety handgrip, of the type defined in the preamble of claim 1.

Conventional garden tools of the above mentioned type satisfactorily perform their task but are susceptible of some improvements.

Ordinary gardening tools have handgrips that are generally made of metal or rigid plastic. In the humid environment of gardens, or when the user's hands are dirty and sweaty, the handgrips can be slippery, making it difficult, awkward and most of all dangerous to use the tool.

Furthermore, the handgrips of conventional portable power tools are generally anchored to the handle in fixed positions with no possibility of adjustment and adaptation to the user's size.

US-A-2,263,431, which shows the features of the preamble of claim 1, discloses a device for cutting or trimming grass, foliage or the like, having a handle provided with hand grips made of rubber or other suitable material. The hand grips are coverings arranged over the handle. No inserts for the handle are disclosed. EP-A-0 284 659 discloses a vibration-damping control handle for a portable power tool in which the handle is provided with a rubber covering. No inserts for the handle are disclosed.

The aim of the invention is to improve those implements by providing a portable implement that is safe in use, comfortable, ergonomic, and adaptable to the size of every user.

This aim is achieved with a portable implement of the type defined in the introduction, characterized in that the handle has, at least in the grip regions, antislip inserts made of flexible material.

Preferably, the flexible material is chosen among natural or synthetic rubbers or among very soft plastics. Furthermore, the inserts can have antislip raised portions or surface discontinuities.

An implement with these characteristics offers the advantage of safe and easy grip for the user's hands even in the presence of moisture, sweat, or dirt.

A preferred but not exclusive embodiment of an implement according to the invention is described hereinafter and is illustrated by way of non-limitative example in the accompanying drawings, wherein:

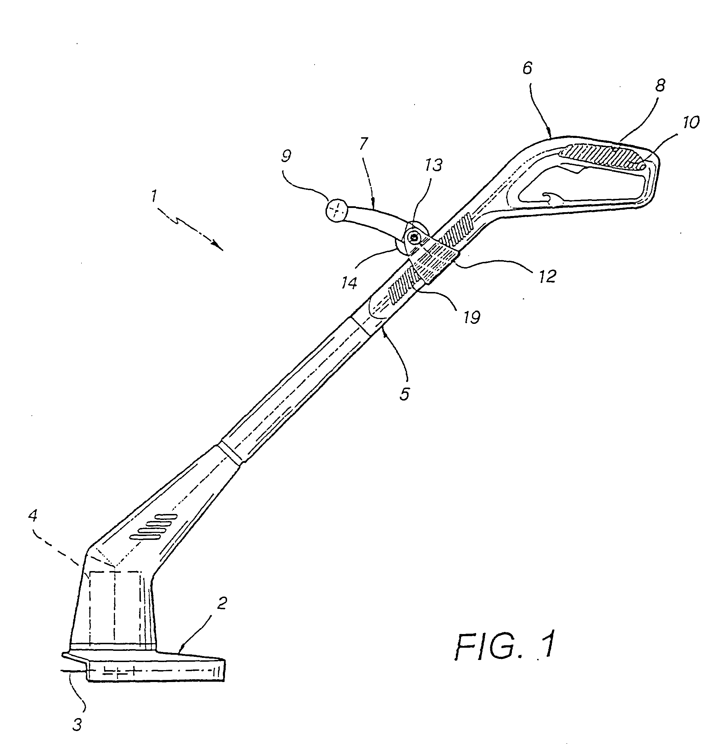

Figure 1 is a side view of the implement according to the invention;

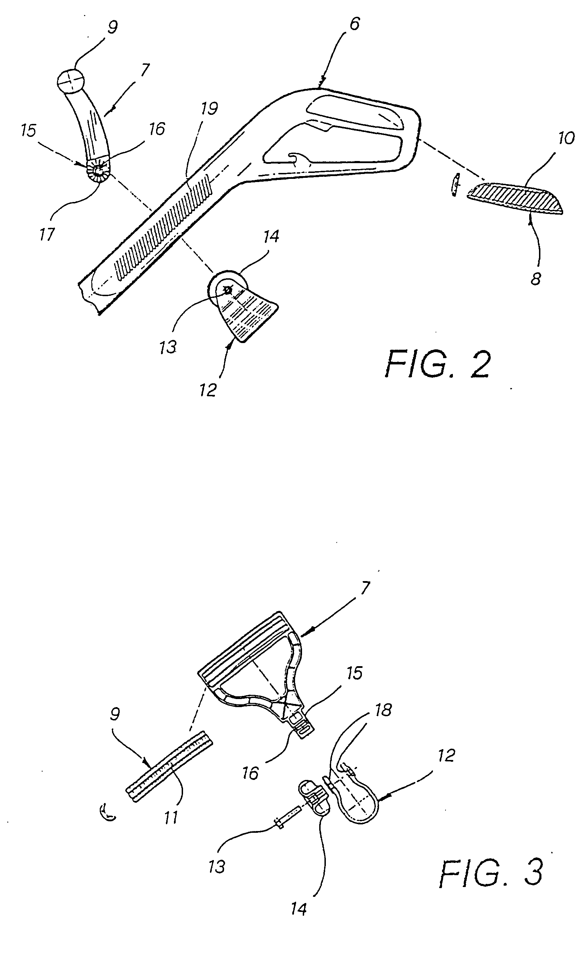

Figure 2 is a partially exploded side view of the grip regions of the implement of Figure 1;
Figure 3 is an exploded front view of a detail of the implement of Figure 1.

With reference to the above figures, the implement according to the invention, generally designated by the reference numeral 1, includes a tool supporting head 2 with a rotary tool 3, for example of the nylon-whip type, actuated by a motor 4, for example of the electric type.

Tool supporting head 2 is connected to a substantially rigid handle 5 provided with grip regions that include a first handhold 6 that is formed monolithically with handle 5 at its free end, and a second handhold 7 that is anchored on handle 5 at a distance from first handhold 6.

According to the invention, both handholds 6 and 7 are provided with respective antislip inserts or coverings 8 and 9 made of flexible material, which are fixed to the grip regions and are meant to improve grip of the implement 1 on the part of the user's hands.

The material of inserts 8, 9 can be chosen among natural or synthetic rubbers or among very soft durable plastics.

The surface of inserts 8, 9 can be provided with series of raised portions, hollows, knurlings, and/or grooves 10 and 11 to further improve the grip of the implement.

According to the invention, second handhold 7 is connected to handle 5 by an adjustable friction anchoring means.

The anchoring means can be constituted by a substantially U-shaped bracket 12 that can be secured on the handle 5 in a position that is selected by the user. Bracket 12 can be connected to handhold 7 by a threaded pivot 13 that can be inserted in holes formed on the wings of the bracket and on which a securing handwheel 14 is screwed.

Handhold 7 is provided with a connecting protrusion 15 with a transverse through hole 16 for the insertion of threaded pivot 13.

A series of angularly spaced and equidistant radial grooves 17 is formed on protrusion 15, peripherally with respect to hole 16. The grooves are suitable to cooperate with a series of corresponding grooves or discontinuities 18 that are formed on the internal surface of bracket 12, so as to lock handhold 7 in a desired angular position by securing bracket 12 with handwheel 14.

Furthermore, series of grooves 19 are formed on the opposite sides of handle 5 and are slightly inclined with respect to the longitudinal direction. Grooves 19 cooperate with the internal surface of bracket 12 to lock it in a position that is preset both longitudinally and transversely with respect to handle 5.

It has been found in practice that the implement according to the invention achieves the intended aim and in particular the fact is stressed that antislip inserts 8 and 9 allow comfortable and safe grip of the implement even in the presence of moisture and dirt on the grip regions thereof.

Furthermore, the adjustability of handhold 7 in a longitudinal, transverse, and angular direction with respect to the handle allows the user to position the grip regions in an optimum and ergonomic manner, reducing the overall effort of the arms and making work more comfortable.

## Claims

1. A motorized portable gardening implement, particularly edge trimmer of the whip type, comprising a tool supporting head (2) that is rigidly coupled to the end of a substantially rigid handle (5) that can be gripped by a user, **characterized in that**, at least in the grip regions, said handle has antislip inserts made of flexible material.

2. Implement according to claim 1, **characterized in that** said flexible material of said inserts (8, 9) is chosen among natural and synthetic rubbers and among very soft plastics.

3. Implement according to claim 1, **characterized in that** said inserts (8, 9) have raised portions and/or knurlings and/or surface discontinuities (10, 11) that are suitable to achieve improved and safer grip.

4. Implement according to claim 1, **characterized in that** said grip regions comprise a first handhold (6) that is formed monolithically at the end of said handle (5), which has at least two of said inserts (8, 9) stably fixed to the opposite sides of said region.

5. Implement according to claim 1, **characterized in that** said grip regions comprise a second handhold (7) that can be anchored to said handle (5) in an longitudinally, transversely, and angularly adjustable position.

6. Implement according to claim 5, **characterized in that** said second handhold (7) is connected to said handle (5) by an adjustable friction anchoring means.

7. Implement according to claim 6, **characterized in that** said adjustable friction anchoring means comprises a bracket (12) that can be secured around said handle (5) and can be connected to said second handhold (7) by a threaded pivot (13) with a securing handwheel (14).

8. Implement according to claim 6, **characterized in that** said second handhold (7) is provided with a protrusion (15) for connection to a substantially transverse hole (16) for the passage of said threaded pivot (13).

9. Implement according to claim 6, **characterized in that**, peripherally with respect to the hole (16) of said tab (15), said second handle (7) has a series of angularly spaced and equidistant radial grooves (17) that are suitable to cooperate with complementarily shaped radial grooves or discontinuities (18) that are formed, in corresponding positions, on the internal surface of said bracket (12), to lock the angular position of the second handhold (7) when the handwheel (14) is closed.

10. Implement according to claim 6, **characterized in that** said handle (5) has, on opposite sides, series of grooves (19) that are slightly inclined with respect to the longitudinal direction and are suitable to cooperate with the internal surfaces of said bracket to lock it transversely and longitudinally with respect to the handle (5).

## Patentansprüche

1. Motorbetriebenes, tragbares Gartengerät, insbesondere Kantentrimmer des Fadentrimmertyps, mit einem Werkzeugtragkopf (2), der starr mit dem Ende einer im wesentlichen starren Handhabe (5) verbunden ist, welche von einem Anwender ergriffen werden kann,
**dadurch gekennzeichnet,**
**daß** die Handhabe zumindest in den Griffbereichen Antirutscheinlagen aufweisen, die aus einem flexiblen Material gefertigt sind.

2. Gerät nach Anspruch 1, **dadurch gekennzeichnet, daß** das flexible Material der Einlagen (8, 9) aus natürlichen und synthetischen Gummis sowie aus sehr weichen Kunststoffen gewählt ist.

3. Gerät nach Anspruch 1, **dadurch gekennzeichnet, daß** die Einlagen (8, 9) erhabene Bereiche und/oder Rändelungen und/oder Oberflächenunstetigkeiten (10, 11) aufweisen, die geeignet sind, einen verbesserten und sichereren Griff zu erzielen.

4. Gerät nach Anspruch 1, **dadurch gekennzeichnet, daß** die Griffbereiche einen ersten Handgriff (6) aufweisen, der einstückig am Ende der Handhabe (5) ausgebildet ist, welcher mindestens zwei der Einlangen (8, 9) aufweist, die fest an gegenüberliegenden Seiten des Bereichs angeordnet sind.

5. Gerät nach Anspruch 1, **dadurch gekennzeichnet, daß** die Griffbereiche einen zweiten Handgriff (7) aufweisen, der an der Handhabe (5) in einer in Längsrichtung, in Querrichtung und in einem Winkel einstellbaren Position festgelegt werden kann.

6. Gerät nach Anspruch 5, **dadurch gekennzeichnet, daß** der zweite Handgriff (7) mit der Handhabe (5) über ein einstellbares Reibungsverankerungsmittel verbunden ist.

7. Gerät nach Anspruch 6, **dadurch gekennzeichnet, daß** das einstellbare Reibungsverankerungsmittel eine Klammer (12) aufweist, die um die Handhabe (5) herum gesichert ist und mit dem zweiten Handgriff (7) mittels eines Schraubbolzens (13) mit einem sichernden Handrad (14) verbunden werden kann.

8. Gerät nach Anspruch 6, **dadurch gekennzeichnet, daß** der zweite Handgriff (7) einen Vorsprung (15) aufweist zum Verbinden mit einer im wesentlichen quer zu dieser geführten Öffnung (16) für den Durchgang des Schraubbolzens (13).

9. Gerät nach Anspruch 6, **dadurch gekennzeichnet, daß** der zweite Handgriff (7) bezüglich der Öffnung (16) der Zunge (15) am Rande eine Reihe von winkelig beabstandeten und äquidistanten radialen Nuten (17) aufweist, die dazu geeignet sind, mit komplementär geformten radialen Nuten oder Unstetigkeiten (18) zusammenzuwirken, die in entsprechenden Positionen auf der innenliegenden Fläche der Klammer (12) ausgebildet sind, um die Winkelposition des zweiten Handgriffs (7) zu verriegeln, wenn das Handrad (14) geschlossen ist.

10. Gerät nach Anspruch 6, **dadurch gekennzeichnet, daß** die Handhabe (5) auf einander gegenüberliegenden Seiten Reihen von Nuten (19) aufweist, die gegenüber der Längsrichtung leicht geneigt verlaufen und die dazu geeignet sind, mit den Innenflächen der Klammer zusammenzuwirken, um letztere bezüglich der Handhabe (5) in Längs- und in Querrichtung zu verriegeln.

## Revendications

1. Ustensile de jardinage portable motorisé, en particulier taille-bordure du type à fouet, comportant une tête (2) de support d'outil, qui est associée d'une manière rigide à l'extrémité d'un manche (5) sensiblement rigide qui peut être saisi par un utilisateur, **caractérisé en ce que**, au moins dans les régions de préhension, ledit manche comporte des éléments rapportés anti-glissement fabriqués en un matériau souple.

2. Ustensile selon la revendication 1, **caractérisé en ce que** ledit matériau souple desdits éléments rapportés (8, 9) est choisi parmi les caoutchoucs naturels et synthétiques et parmi les matières plastiques très tendres.

3. Ustensile selon la revendication 1, **caractérisé en ce que** lesdits éléments rapportés (8, 9) ont des parties saillantes et/ou des moletages et/ou des discontinuités surfaciques (10, 11) qui sont adaptés pour permettre une préhension meilleure et plus sûre.

4. Ustensile selon la revendication 1, **caractérisé en ce que** lesdites régions de préhension comprennent une première poignée (6) qui est formée d'une manière monolithique à l'extrémité dudit manche (5), qui a au moins deux desdits éléments rapportés (8, 9) fixés d'une manière stable au niveau des côtés opposés de ladite région.

5. Ustensile selon la revendication 1, **caractérisé en ce que** lesdites régions de préhension comprennent une seconde poignée (7) qui peut être ancrée sur ledit manche (5) dans une position ajustable longitudinalement, transversalement et angulairement.

6. Ustensile selon la revendication 5, **caractérisé en ce que** ladite seconde poignée (7) est reliée audit manche (5) par des moyens d'ancrage frictionnels ajustables.

7. Ustensile selon la revendication 6, **caractérisé en ce que** lesdits moyens d'ancrage frictionnels ajustables comprennent un étrier (12) qui peut être fixé autour dudit manche (5) et qui peut être relié à ladite seconde poignée (7) par un pivot fileté (13) avec un volant de fixation (14).

8. Ustensile selon la revendication 6, **caractérisé en ce que** ladite seconde poignée (7) comporte une protubérance (15) de raccordement à un trou (16) sensiblement transversal destiné au passage dudit pivot fileté (13).

9. Ustensile selon la revendication 6, **caractérisé en ce que**, d'une manière périphérique par rapport au trou (16) de ladite patte (15), ladite seconde poignée (7) comporte une série de gorges radiales (17) angulairement espacées et équidistantes qui sont adaptées pour coopérer avec des gorges ou discontinuités radiales (18) configurées d'une manière complémentaire qui sont formées, dans des positions correspondantes, sur la surface interne dudit étrier (12), pour verrouiller la position angulaire de la seconde poignée (7) lorsque le volant (14) est fermé.

10. Ustensile selon la revendication 6, **caractérisé en ce que** ledit manche (5) comporte, sur des côtés opposés, des séries de gorges (19) qui sont légèrement inclinées par rapport à la direction longitudinale et sont adaptées pour coopérer avec les surfaces internes dudit étrier pour le verrouiller transversalement et longitudinalement par rapport au manche (5).
